# EUROPEAN PATENT SPECIFICATION

(11) **EP 2 505 466 B1**
(45) Date of publication and mention of the grant of the patent: **02.07.2014**
(21) Application number: 11160531.7
(22) Date of filing: 30.03.2011
(51) Int. Cl.: B62J 6/00, B62J 6/16, B62K 23/06, B62M 6/45

(54) **Wireless-control lighting device**
Beleuchtungsvorrichtung mit drahtloser Steuerung
Dispositif d'éclairage à commande sans fil

(43) Date of publication of application: 03.10.2012
(73) Proprietor: Tektro Technology Corporation, Changhua County (TW)
(72) Inventor: Tsai, Szu-Fang, Changhua County (TW)
(74) Representative: Lang, Christian

(56) References cited:
- EP-A1- 1 568 584
- WO-A1-03/052949
- WO-A2-2010/077300
- CN-U- 202 054 086
- GB-A- 2 413 376
- US-A1- 2007 249 503
- US-A1- 2008 088 423
- US-A1- 2011 037 580
- US-A1- 2012 242 471

## Description

### BACKGROUND OF THE INVENTION

### 1. Field of the Invention

The present invention relates to a lighting control device, and more particularly to a wireless-control lighting device for bicycles.

### 2. Description of Related Art

Taking both factors of fitness and energy saving into consideration, a bicycle has become widely common as a transport tool. A conventional bicycle does not have complete sound warning and lighting design like cars or motorcycles, and therefore would have deficiency in riding safety.

Particularly when it is dark or in poor visibility due to the rain, riding a bicycle becomes dangerous. In the case that some conventional bicycles have reflecting sheets and warning bells, the reflecting sheets work only when there are sufficient amount of light around them. If the light is too weak from the rear thereof or even no light at all, the reflecting sheets are hard to offer good warning effect. The bells intend to malfunction or be operated in wrong manner if the mechanic structures of their switch bars or clappers are cumbersome and easy to rust. Furthermore, the bell can only make sound without any lighting warning effect.

Furthermore, in the case that RF or Bluetooth is used for the wireless control of the lighting warning device, conditions for the surrounding of the user during riding could not be detected, and the external noise interference will cause interior signal transmission or errors in signal transmission.

Therefore, there is a need of a novel wireless-control lighting device which overcomes the above disadvantages of riding safety.

US 2008/088423 A1, which is considered to represent the closest prior art, describes a RF wireless signal light. A control and display for a RF wireless signal light includes a wireless remote control device and a sound-light warning device. The wireless remote control device includes a light signal controller, a light signal switch circuit, a RF wireless signal emitter and a battery set. The light signal controlled has touch keys for being operated and sends a signal such as a right turn signal, a left turn signal or a flash warning signal to the light signal switch circuit. The signal is executed and treated by the light signal switch circuit as a control signal and the control signal is sent to the sound-light warning device at the back of the bike via the RF wireless signal emitter to perform wireless signal transmission.

EP 1 568 584 A1 discloses an onboard computer-integrated lighting, signaling and roadway-icon printing device for bicycles. The onboard computer-integrated lighting, signaling and roadway-icon printing device for bicycles is comprised of front unit and rear unit. The rear unit particularly has a data and command reception and transmission circuit and an array of high-luminosity red light-emitting diodes for the rear signaling. The front unit particularly comprises another data and command reception and transmission circuit for wired or wireless communication with the rear unit.

US 20111037580 A1 discloses a traffic warning device comprising a light-emitting apparatus to be disposed on a safety helmet and a remote control cooperating with the light-emitting apparatus. The light-emitting apparatus is allowed to receive a wireless signal from the remote control to present a left-turn, a right-turn or a continually-flashing sign to call the attention of the vehicles behind.

GB 2 413 376 A discloses a braking warning control device for a bike to warn an approaching vehicle by turning on a bulb on a warning light whenever a rider applies a brake of the bike. A magneto switch is provided in a braking fixture, a magnet is provided on the braking level, and a warning light is provided on the rear of the bike. A wireless signal transmission module is provided at an output end of the magneto switch and a wireless signal receiving module is mounted in the warning light for communication.

### SUMMARY OF THE INVENTION

The object of the present invention is to provide a wireless-control switch module in combination with a braking handlebar for multiple wireless-control purpose so as to increase the safety for the user in use,

In order to achieve the above and other objectives, a wireless-control lighting device includes a control switch module configured to be mounted on a braking handle set, and a lighting displaying unit configured to be mounted on a bicycle and having a wireless receiver, a plurality of indicators and a second power supply. The control switch module includes a switch element, a circuit board, a wireless superconductor IC and a first power supply. The switch element and the wireless superconductor IC are electrically connected to the circuit board. The first power supply provides power to the circuit board and the wireless super conductor. When the switch element is working, and the wireless superconductor IC emits an actuating signal. The wireless receiver, the indicators and the second power supply are electrically connected to one another. The second power supply provides power to the wireless receiver and the indicators. The wireless receiver receives the actuating signal which accordingly actuates the operation of the indicators. Thereby the multiple wireless control operation can be achieved.

The switch element includes a braking lighting switch, a right-direction lighting switch, a left lighting switch, a head lighting switch, an electronic speaker switch, a power system switch to correspondingly control a braking lighting, a right-direction lighting, a left-direction lighting, a head lighting, an electronic speaker and a power system.

In order to further the understanding regarding the present invention, the following embodiments are provided along with illustrations to facilitate the disclosure of the present invention.

### BRIEF DESCRIPTION OF THE DRAWINGS

Fig. 1 is a block diagram of a wireless-control lighting device according to the invention.
Fig. 2 is a schematic view of a wireless-control lighting device mounted on a braking handle set of a bicycle according to the invention.
Fig. 3 is a schematic view of a wireless-control lighting device mounted on a braking handlebar of a bicycle according to the invention.
Fig. 4 is a schematic view of a braking switch in a wire-less control lighting device according to the invention.
Fig. 5 is a schematic view of a right-direction lighting switch and a left-direction lighting switch in a wireless-control lighting device according to the invention.
Fig. 6 is a schematic view of an indicator in a wireless-control lighting device according to the invention.

### DETAILED DESCRIPTION OF THE PREFERRED EMBODIMENTS

The aforementioned illustrations and following detailed descriptions are exemplary for the purpose of further explaining the scope of the present invention. Other objectives and advantages related to the present invention will be illustrated in the subsequent descriptions and appended tables.

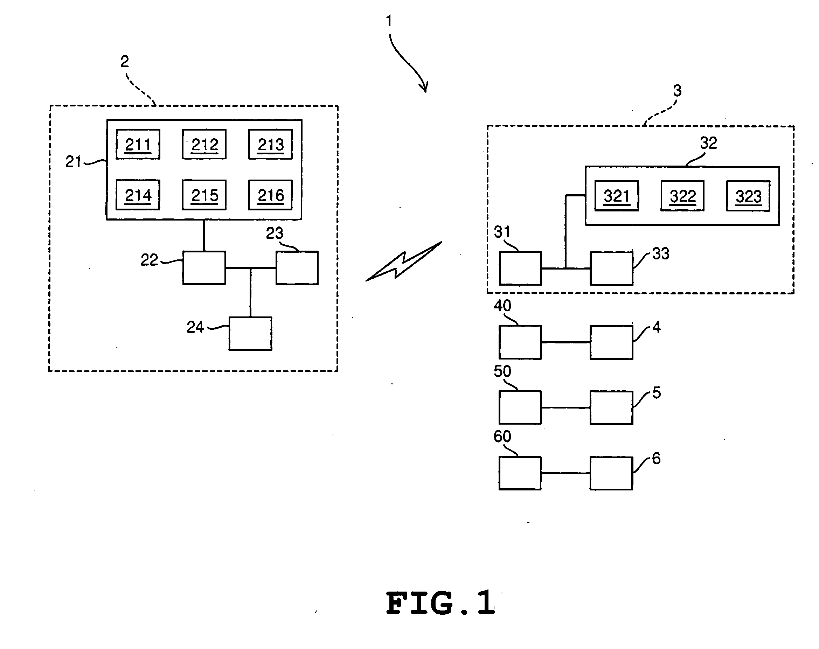

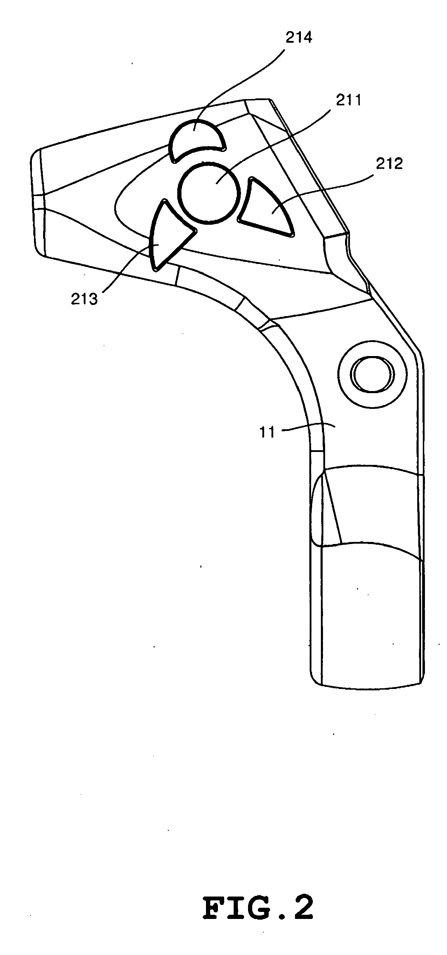

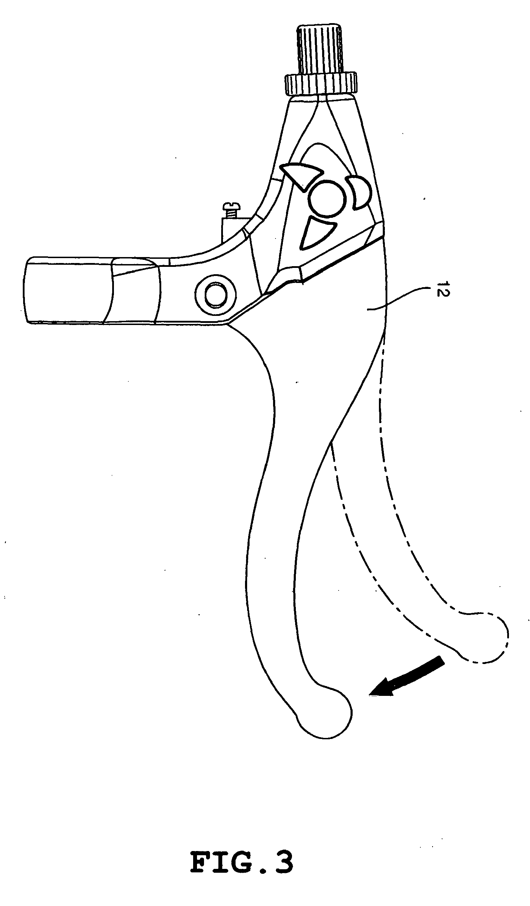

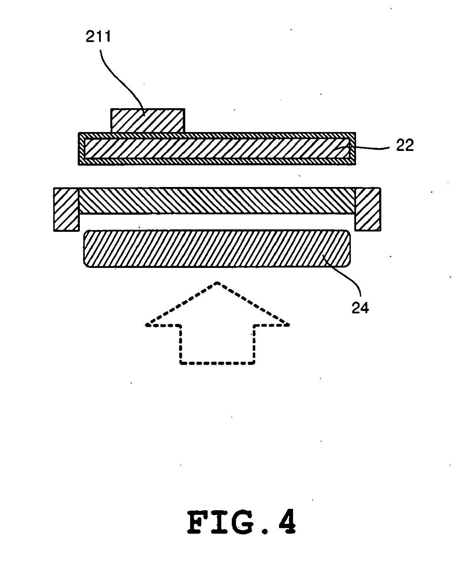

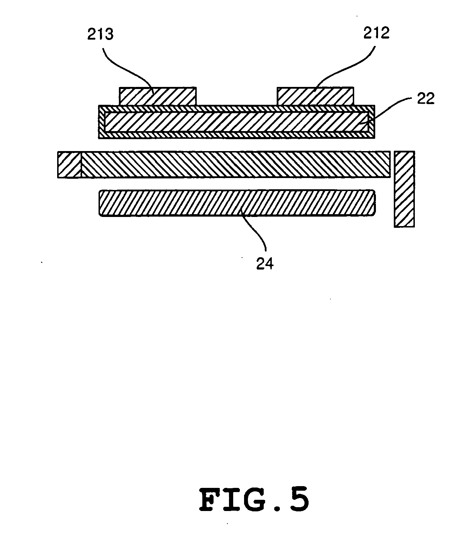

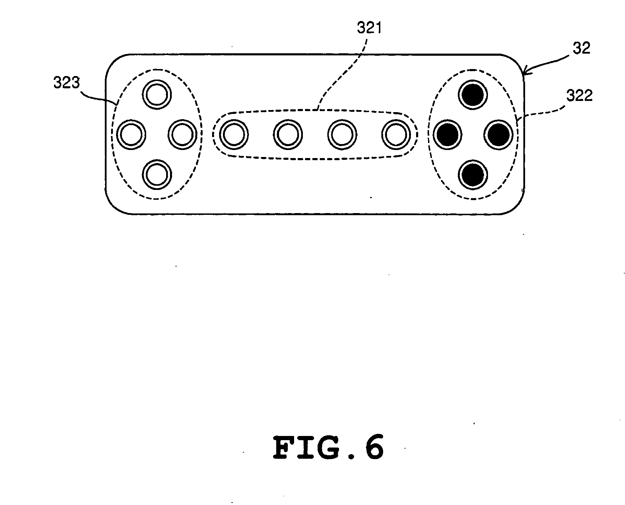

Fig. 1 is a block diagram of a wireless-control lighting device according to the invention. Fig. 2 is a schematic view of a wireless-control lighting device mounted on a braking handle set of a bicycle according to the invention. Fig. 3 is a schematic view of a wireless-control lighting device mounted on a braking handlebar of a bicycle according to the invention. Fig. 4 is a schematic view of a braking switch in a wire-less control lighting device according to the invention. Fig. 5 is a schematic view of a right-direction lighting switch and a left-direction lighting switch in a wireless-control lighting device according to the invention. Fig. 6. is a schematic view of an indicator in a wireless-control lighting device according to the invention.

The wireless-control lighting device 1 according to the invention includes a control switch module 2 and a light displaying unit 3.

The control switch module 2 is mounted on a braking handle set 11, and includes a switch element 21, a circuit board 22, a wireless superconductor IC 23 and a first power supply 24. The switch element 21 and the wireless superconductor 23 are electrically connected to the circuit board 22. The first power supply 24 provides power to the circuit board 22 and the wireless superconductor IC 23. When the switch element 21 is working, the wireless superconductor IC 23 emits an actuating signal.

The superconductor is found in 1911 by Dutch scientist Kammerligh Onnes, which could work well in presentence of no electrical resistance when the temperature is around absolute zero degree. When the temperature is down to about 4K (-269 °C) which the helium becomes liquefied, some materials have the same phenomenon. The superconductor of first generation is generally referred to be as a low temperature superconductor (LTS) material having superconducting transition temperature which is also called as critical temperature Tc (even the temperature exceeds this transition temperature, the material still has superconducting phenomenon) of about 39K above the absolute zero degree. When the temperature is lower than the critical temperature Tc, the material has zero resistance and diamagnetism. Therefore the signal emitted from the wireless superconducting IC 23 used in the invention can prevent any signal interference and high power consumption.

The light displaying unit 3 is mounted at a proper position of a bicycle (not shown), for example a rear of the bicycle. The light displaying unit 3 has a wireless receiver 31, a plurality of indicators 32 and a second power supply 33. The wireless receiver 31, the indicators 32 and the second power supply 33 are electrically connected. The second power supply 33 provides power to the wireless receiver 31 and the indicators 32. The wireless receiver 31 receivers the actuating signal which accordingly actuates the operation of the indicators 32.

The switch element 21 at least includes a braking lighting switch 211, a right-direction lighting switch 212 and a left-direction lighting switch 213.

The braking lighting switch 211 can be a magnetic switch. At least one of the indicators 32 has a braking lighting 321 consisting of a plurality of LEDs. When one of the braking handlebar 12 of the bicycle (not shown) comes to action and thereby changes the magnet field, the braking lighting switch 211 (magnetic switch) is working so that the actuating signal becomes a braking lighting signal which is then transmitted to the wireless receiver 31 and accordingly to turn on or off the braking lighting 321.

The right-direction lighting switch 212 and the left-direction lighting switch 213 are respectively a press switch. At least one indicator has a right-direction lighting 322 and a left-direction lighting 323. The right-direction lighting switch 212 is working or the left-direction lighting switch 213 is working as soon as pressed down, and the actuating signal becomes a right-direction lighting signal or a left-direction lighting signal which is then transmitted to the wireless receiver 31. The right-direction lighting 322 or the left-direction lighting 323 turns on or turns off according to the received signal. The right-direction lighting 322 and the left-direction lighting 323 respectively consist of a plurality of LEDs, and can be flashing for 15 seconds with each cycle of 3 or 4 seconds when turn on.

The wireless-control lighting device 1 further includes a head lighting 4 consisting of a plurality of LEDs and a wireless receiver 40. The head lighting 4 is mounted at front of the bicycle (not shown). The switch element 21 further includes a head lighting switch 214. The head lighting switch 214 is a press switch. The head lighting switch 214 is working as soon as pressed down, and the actuating signal becomes a head lighting signal which is then transmitted to the wireless receiver 40 and accordingly to turn on or off the head lighting 4.

Furthermore, the wireless-control lighting device 1 further includes an electronic speaker 5 and a wireless receiver 50. The electronic speaker 5 is mounted on the bicycle (not shown). The switch element 21 further includes an electronic speaker switch 215. The electronic speaker switch 215 can be a press switch. The electronic speaker switch 215 is working as soon as pressed down, and the actuating signal becomes an electronic speaker signal which is then transmitted to the wireless receiver 50 and the electronic speaker 5 accordingly makes a sound such as a warning voice or music.

Furthermore, the above bicycle (not shown) can be a power-driven bicycle having a power system 6 and a wireless receiver 60. The switch element 21 further includes a power system switch 216 which can be a press switch. The power system switch 216 is working as soon as being pressed, and the actuating signal becomes a power system signal which is then transmitted to the wireless receiver 60 and accordingly to start or stop the operation of the power system 6.

Therefore, with the above configuration, the superconductor IC 23 is used to receive and transmit the signal. The distinguishing characters of non electric resistance and reverse magnetism for the superconductor material can shield off any signal interference (noise) and prevent any high power consumption, compared to the RF or Bluetooth. Through each functional switch of the switch element 21 in the control switch module 2, such as the braking lighting switch 211, the right-direction lighting switch 212, the left braking lighting switch 213, the head lighting switch 214, the electronic speaker switch 215 and the power system switch 216, the corresponding elements such as the braking lighting 321, the right-direction lighting 322, the left braking lighting 323, the head lighting 4, the electronic speaker 5 and the power system 6, are controlled to reach multiple wireless control and thereby increase the safety for the user in use.

The descriptions illustrated *supra* set forth simply the preferred embodiments of the , present invention; however, the characteristics of the present invention are by no means restricted thereto. All changes, alternations, or modifications conveniently considered by those skilled in the art are deemed to be encompassed within the scope of the present invention delineated by the following claims.

## Claims

1. A wireless-control lighting device (1), comprising:
a control switch module (2), configured to be mounted on a braking handle set (11), the control switch module (2) comprising a switch element (21), a circuit board (22), a wireless superconductor IC (23) and a first power supply (24); the switch element (21) and the wireless superconductor IC (23) are electrically connected to the circuit board (22); the first power supply provides (24) power to the circuit board (22) and the wireless superconductor IC (23); when the switch element (21) is working, and the wireless superconductor IC (23) emits an actuating signal; and
a lighting displaying unit (3), configured to be mounted on a bicycle and having a wireless receiver (31), a plurality of indicators (32) and a second power supply (33); the wireless receiver (31), the indicators (32) and the second power supply (33) are electrically connected to one another; the second power supply (33) provides power to the wireless receiver (31) and the indicators (32); and the wireless receiver (31) receives the actuating signal which accordingly actuates the operation of the indicators (32).

2. The wireless-control lighting device (1) of claim 1, wherein the switch element (21) at least includes a braking lighting switch (211), a right-direction lighting switch (212) and a left-direction lighting switch (213).

3. The wireless-control lighting device (1) of claim 2, wherein the braking lighting switch (211) is a magnetic switch; at least one of the indicators (32) has a braking lighting (321) consisting of a plurality of LEDs; and when one of the braking handlebar (12) of the bicycle comes to action and thereby changes the magnet field, the braking lighting switch (211) is working so that the actuating signal becomes a braking lighting signal which is then transmitted to the wireless receiver (31) and accordingly to turn on or off the braking lighting (321).

4. The wireless-control lighting device (1) of claim 2, wherein the right-direction lighting switch (212) and the left-direction lighting switch (213) are respectively a press switch; at least one indicator (32) has a right-direction lighting (322) and a left-direction lighting (323); the right-direction lighting switch (212) is working or the left-direction lighting switch (213) is working as soon as pressed down, and the actuating signal becomes a right-direction lighting signal or a left-direction lighting signal which is then transmitted to the wireless receiver (31); the right-direction lighting (322) or the left-direction lighting (323) turns on or turns off according to the received signal.

5. The wireless-control lighting device (1) of claim 4, wherein the right-direction lighting (322) and the left-direction lighting (323) respectively consist of a plurality of LEDs.

6. The wireless-control lighting device (1) of claim 2, further comprising a head lighting (4) and a wireless receiver (40); the head lighting (4) is configured to be mounted at front of the bicycle; the switch element (21) further comprises a head lighting switch (214); the head lighting switch (214) is a press switch; the head lighting switch (214) is working as soon as being pressed down and the actuating signal becomes a head lighting signal which is then transmitted to the wireless receiver (40) and accordingly to turn on or off the head lighting (4).

7. The wireless-control lighting device (1) of claim 6, wherein the head lighting (4) consists of a plurality of LEDs.

8. The wireless-control lighting device (1) of claim 4, wherein the right-direction lighting (322) and the left-direction lighting (323) are flashing for 15 seconds with each cycle of 3 or 4 seconds when turn on.

9. The wireless-control lighting device of claim 6, further comprising an electronic speaker (5) and a wireless receiver (50); the electronic speaker (5) is configured to be mounted on the bicycle; the switch element (21) further comprises an electronic speaker switch (215); the electronic speaker switch (215) is a press switch; the electronic speaker switch (215) is working as soon as pressed down, and the actuating signal becomes an electronic speaker signal which is then transmitted to the wireless receiver (50) and the electronic speaker (5) accordingly makes a sound.

10. The wireless-control lighting device (1) of claim 6, configured to be mounted on a power-driven bicycle having a power system (6) and a wireless receiver (60); the switch element (21) further comprises a power system switch (216); the power system switch (216) is a press switch; the power system switch (216) is working as soon as pressed down, and the actuating signal becomes a power system signal which is then transmittable to the wireless receiver (60) and accordingly to start or stop the operation of the power system.

## Patentansprüche

1. Beleuchtungsvorrichtung mit drahtloser Steuerung (1), die umfasst:
ein Steuerungsschaltermodul (2), das darauf ausgelegt ist, an einen Brernsgriffsatz (11) montiert zu werden, wobei das Steuerungsschaltermodul (2) ein Schalterelement (21), eine Leiterplatte (22), einen drahtlosen supraleitenden integrierten Schaltkreis (23) und eine erste Energieversorgung (24) umfasst, wobei das Schalterelement (21) und der drahtlose supraleitende integrierte Schaltkreis (23) elektrisch mit der Leiterplatte (22) verbunden sind, wobei die erste Energieversorgung (24) Energie für die Leiterplatte (22) und den drahtlosen supraleitenden integrierten Schaltkreis (23) bereitstellt, wobei wenn das Schalterelement (21) arbeitet, sendet der drahtlose supraleitende integrierte Schaltkreis (23) ein Betätigungssignal aus; und
eine Lichterzeugungseinheit (3), die darauf ausgelegt ist, an einem Fahrrad montiert zu werden, und die einen drahtlosen Empfänger (31), eine Vielzahl von Anzeigern (32) und eine zweite Energieversorgung (33) aufweist, wobei der drahtlose Empfänger (31), die Anzeiger (32) und die zweite Energieversorgung (33) elektrisch miteinander verbunden sind, wobei die zweite Energieversorgung (33) Energie für den drahtlosen Empfänger (31) und die Anzeiger (32) bereitstellt und wobei der drahtlose Empfänger (31) das Betätigungssignal empfängt, das entsprechend den Betrieb der Anzeiger (32) auslöst.

2. Beleuchtungsvorrichtung mit drahtloser Steuerung (1) nach Anspruch 1, wobei das Schalterelement (21) mindestens einen Bremslichtschalter (211), einen Rechts-Richtungs-Lichtschalter (212) und einen Links-Richtungs-Lichtschalter (213) aufweist.

3. Beleuchtungsvorrichtung mit drahtloser Steuerung (1) nach Anspruch 2, wobei der Bremslichtschalter (211) ein magnetischer Schalter ist, wobei mindestens einer der Anzeiger (32) ein Bremslicht (321) aufweist, das aus einer Vielzahl von LEDs besteht, wobei, wenn einer der Bremshebel (11) des Fahrrads betätigt und dadurch das Magnetfeld geändert wird, der Bremslichtschalter (211) so arbeitet, dass das Betätigungssignal ein Bremslichtsignal wird, das dann an den drahtlosen Empfänger (31) übertragen wird und entsprechend das Bremslicht (321) an- oder abgeschaltet wird.

4. Beleuchtungsvorrichtung mit drahtloser Steuerung (1) nach Anspruch 2, wobei der Rechts-Richtungs-Lichtschalter (212) und der Links-Richtungs-Lichtschalter (213) jeweils ein Druckschalter sind, wobei mindestens ein Anzeiger (32) ein Rechts-Richtungs-Licht (322) und ein Links-Richtungs-Licht (323) aufweist, wobei der Rechts-Richtungs-Lichtschalter (212) arbeitet oder der Links-Richtungs-Lichtschalter (213) arbeitet, sobald sie gedrückt werden, wobei dann das Betätigungssignal ein Rechts-Richtungs-Lichtsignal oder ein Links-Richtungs-Lichtsignal wird, das dann an den drahtlosen Empfänger (31) übertragen wird, wobei entsprechend dem empfangenen Signal das Rechts-Richtungs-Licht (322) oder das Links-Richtungs-Licht (323) an- oder abgeschaltet wird.

5. Beleuchtungsvorrichtung mit drahtloser Steuerung (1) nach Anspruch 4, wobei das Rechts-Richtungs-Licht (322) und das Links-Richtungs-Licht (323) jeweils aus einer Vielzahl von LEDs bestehen.

6. Beleuchtungsvorrichtung mit drahtloser Steuerung (1) nach Anspruch 2, die ferner einen Scheinwerfer (4) und einen drahtlosen Empfänger (40) umfasst, wobei der Scheinwerfer (4) darauf ausgelegt ist, an einer Vorderseite des Fahrrads montiert zu werden, wobei das Schalterelement (21) ferner einen Frontlichtschalter (214) umfasst, wobei der Frontlichtschalter (214) ein Druckschalter ist, wobei der Frontlichtschalter (214) arbeitet, sobald er gedrückt wird, wobei dann das Betätigungssignal ein Frontlichtsignal wird, welches dann an den drahtlosen Empfänger (40) übertragen wird, um entsprechend den Scheinwerfer (4) an- oder abzuschalten.

7. Beleuchtungsvorrichtung mit drahtloser Steuerung (1) nach Anspruch 6, wobei der Scheinwerfer (4) aus einer Vielzahl von LEDs besteht.

8. Beleuchtungsvorrichtung mit drahtloser Steuerung (1) nach Anspruch 4, wobei das Rechts-Richtungs-Licht (322) und das Links-Richtungs-Licht (323) für 15 Sekunden mit einem Zyklus von 3 oder 4 Sekunden blinken, wenn sie angeschaltet werden.

9. Beleuchtungsvorrichtung mit drahtloser Steuerung nach Anspruch 6, die ferner einen elektronischen Lautsprecher (5) und einen drahtlosen Empfänger (50) umfasst, wobei der elektronischen Lautsprecher (5) darauf ausgelegt ist, an dem Fahrrad montiert zu werden, wobei das Schalterelement (21) ferner einen Schalter für den elektronischen Lautsprecher (215) umfasst, wobei der Schalter für den elektronischen Lautsprecher (215) ein Druckschalter ist, wobei der Schalter für den elektronischen Lautsprecher (215) arbeitet, sobald er gedrückt wird, wobei dann das Betätigungssignal ein Signal für den elektronischen Lautsprecher wird, welches dann an den drahtlosen Empfänger (50) übertragen wird und der elektronische Lautsprecher (5) erzeugt entsprechende Geräusche.

10. Beleuchtungsvorrichtung mit drahtloser Steuerung (1) nach Anspruch 6, die darauf ausgelegt ist an einem angetriebenen Fahrrad montiert zu werden, das ein Antriebssystem (6) aufweist und einen drahtlosen Empfänger aufweist, wobei das Schalterelement (21) ferner einen Antriebssystemschalter (216) umfasst, wobei der Antriebssystemschalter (216) ein Druckschalter ist, wobei der Antriebssystemschalter (216) arbeitet, sobald er gedrückt wird, wobei dann das Betätigungssignal ein Antriebssystemsignal wird, welches dann an den drahtlosen Empfänger (50) übertragen wird und entsprechend der Betrieb des Antriebssystems gestartet oder gestoppt wird.

## Revendications

1. Dispositif d'éclairage sans fil (1) comprenant :
un module d'interrupteur de commande (2) configuré pour être monté sur un ensemble de poignée de freinage (11), le module d'interrupteur de commande (2) comprenant un élément de commutation (21), un circuit imprimé (22), un supraconducteur sans fil IC (23) et une première alimentation électrique (24), l'élément de commutation (21) et le supraconducteur sans fil IC (23) sont reliés électriquement au circuit imprimé (22), la première alimentation électrique (24) fournit de l'électricité au circuit imprimé (22) et au supraconducteur sans fil IC (23) lorsque l'élément de commutation (21) travaille et le supraconducteur sans fil IC (23) émet un signal d'actionnement et
une unité d'affichage d'éclairage (3) configurée pour être montée sur une bicyclette et ayant un récepteur sans fil (31), une pluralité d'indicateurs (32) et une seconde alimentation électrique (33), le récepteur sans fil (31), les indicateurs (32) et la seconde alimentation électrique (33) sont reliés électriquement l'un à l'autre, la seconde alimentation électrique (33) fournit de l'électricité au récepteur sans fil (31) et aux indicateurs (32) et le récepteur sans fil (31) reçoit le signal d'actionnement qui actionne en conséquence le fonctionnement des indicateurs (32).

2. Dispositif d'éclairage sans fil (1) selon la revendication 1 dans lequel l'élément de commutation (21) comprend au moins un commutateur d'éclairage de freinage (211), un commutateur d'éclairage de direction à droite (212) et un commutateur d'éclairage de direction à gauche (213).

3. Dispositif d'éclairage sans fil (1) selon la revendication 2 dans lequel le commutateur d'éclairage de freinage (211) est un commutateur magnétique, au moins l'un des indicateurs (32) a un éclairage de freinage (321) qui consiste en une pluralité de LED et lorsque l'une des poignées de freinage (12) de la bicyclette entre en action et change ainsi le champ magnétique, le commutateur d'éclairage de freinage (211) travaille si bien que le signal d'actionnement devient un signal d'éclairage de freinage qui est ensuite transmis au récepteur sans fil (31) et en conséquence met en marche ou arrête l'éclairage de freinage (321).

4. Dispositif d'éclairage sans fil (1) selon la revendication 2 dans lequel le commutateur d'éclairage de direction à droite (212) et le commutateur d'éclairage de direction à gauche (213) sont respectivement un bouton-poussoir, au moins un indicateur (32) a un éclairage de direction à droite (322) et un éclairage de direction à gauche (323), le commutateur d'éclairage de direction à droite (212) travaille ou le commutateur d'éclairage de direction à gauche (213) travaille dès qu'ils sont enfoncés et le signal d'actionnement devient un signal d'éclairage de direction à droite ou un signal d'éclairage de direction à gauche qui est ensuite transmis au récepteur sans fil (31), l'éclairage de direction à droite (322) ou l'éclairage de direction à gauche (323) se met en marche ou s'arrête selon le signal reçu.

5. Dispositif d'éclairage sans fil (1) selon la revendication 4 dans lequel l'éclairage de direction à droite (322) et l'éclairage de direction à gauche (323) consistent respectivement en une pluralité de LED.

6. Dispositif d'éclairage sans fil (1) selon la revendication 2 comprenant de plus un éclairage de tête (4) et un récepteur sans fil (40), l'éclairage de tête (4) est configuré pour être monté sur le devant de la bicyclette, l'élément de commutation (21) comprend de plus un commutateur d'éclairage de tête (214), le commutateur d'éclairage de tête (214) est un bouton-poussoir, le commutateur d'éclairage de tête (214) travaille dès qu'il est enfoncé et le signal d'actionnement devient un signal d'éclairage de tête qui est ensuite transmis au récepteur sans fil (40) et en conséquence pour mettre en marche ou arrêter l'éclairage de tête (4).

7. Dispositif d'éclairage sans fil (1) selon la revendication 6 dans lequel l'éclairage de tête (4) consiste en une pluralité de LED.

8. Dispositif d'éclairage sans fil (1) selon la revendication 4 dans lequel l'éclairage de direction à droite (322) et l'éclairage de direction à gauche (323) sont clignotants pendant 15 secondes avec chaque cycle de 3 ou 4 secondes lorsqu'ils sont en marche.

9. Dispositif d'éclairage sans fil selon la revendication 6 comprenant de plus un haut-parleur électronique (5) et un récepteur sans fil (50), le haut-parleur électronique (5) est configuré pour être monté sur la bicyclette, l'élément de commutation (2) comprend de plus un commutateur de haut-parleur électronique (215), le commutateur de haut-parleur électronique (215) est un bouton-poussoir (215), le commutateur de haut-parleur électronique (215) travaille dès qu'il est enfoncé et le signal d'actionnement devient un signal de haut-parleur électronique qui est ensuite transmis au récepteur sans fiil (50) et le haut-parleur électronique (5) en conséquence fait un son

10. Dispositif d'éclairage sans fil (1) selon la revendication 6 configuré pour être monté sur une bicyclette à entraînement électrique ayant un système électrique (6) et un récepteur sans fil (60), l'élément de commutation (21) comprend de plus un commutateur de système électrique (216), le commutateur de système électrique (216) est un bouton-poussoir, le commutateur de système électrique (216) travaille dès qu'il est enfoncé et le signal d'actionnement devient un signal de système électrique qui peut ensuite être transmis au récepteur sans fil (60) et en conséquence pour démarrer ou arrêter le fonctionnement du système électrique.
